# EUROPÄISCHE PATENTSCHRIFT

(11) **EP 1 663 639 B1**
(45) Veröffentlichungstag und Bekanntmachung des Hinweises auf die Patenterteilung: **16.04.2008**
(21) Anmeldenummer: 04764545.2
(22) Anmeldetag: 27.08.2004
(51) Int. Cl.: B32B 11/00, B32B 11/08, B63B 3/14, B63B 5/24

(54) **VERBUNDELEMENTE, INSBESONDERE KAROSSERIETEILE**
COMPOSITE COMPONENTS, IN PARTICULAR BODYWORK PARTS
ELEMENTS COMPOSITES, EN PARTICULIER PIECES DE CARROSSERIE

(30) Priorität: 01.09.2003 DE 10340541
(43) Veröffentlichungstag der Anmeldung: 07.06.2006
(73) Patentinhaber: BASF SE, 67056 Ludwigshafen (DE)
(72) Erfinder: DRÖGE, Thomas, 67434 Neustadt (DE); BOOS, Jürgen, 48531 Nordhorn (DE); HILLER, Stefanie, 32369 Rahden (DE); ELING, Berend, 49448 Lemförde (DE)
(86) Internationale Anmeldenummer: PCT/EP2004/009571
(87) Internationale Veröffentlichungsnummer: WO 2005/023539

(56) Entgegenhaltungen:
- WO-A-02/16460
- WO-A-02/43954
- WO-A-99/58333
- WO-A-99/64233
- WO-A-99/64234

## Beschreibung

Die Erfindung betrifft Verbundelemente, beispielsweise für den Automobilbau oder z.B. als Verkleidungselemente in Immobilien, insbesondere Karosserieteile von Automobilen, Lastkraftwagen, Eisenbahnen, Schiffen oder Flugzeugen Anwendung, bevorzugt Karosserieteile von Automobilen oder Lastkraftwagen, die die folgende Schichtstruktur aufweisen:
(i) 0,05 mm bis 2 mm, bevorzugt 0,1 mm bis 0,5 mm Metall,
(ii) 0,1 mm bis 2 mm, bevorzugt 0,3 mm bis 1,2 mm Polyisocyanat-Polyadditionsprodukte, bevorzugt Polyurethane, die gegebenenfalls Isocyanurat- und/oder Harnstoffstrukturen aufweisen können, bevorzugt mit einen Speichermodul nach DIN EN ISO 6721, bevorzugt gemessen nach dem Torsionspendel-Verfahren, zwischen 60 und 350 MPa bei Temperaturen zwischen -20 und +80°C und/oder ein Speichermodul nach DIN EN ISO 6721, bevorzugt gemessen nach dem Torsionspendel-Verfahren, von mindestens 1,7 MPa bei Temperaturen zwischen +160 und +220 °C, bevorzugt erhältlich durch lösungsmittelfreie Umsetzung von (a) Isocyanaten und (b) gegenüber Isocyanaten reaktive Verbindungen bevorzugt in Kontakt mit den Schichten (i) und (iii), die in einem Trägermaterial, das bevorzugt kein Polyisocyanat-Polyadditionsprodukt ist, vorliegen und bevorzugt die Schicht (i) mit der Schicht (iii) und dem Trägermaterial haftend verbinden,
(iii) 0,05 mm bis 2 mm, bevorzugt 0,1 mm bis 0,5mm Metall.

Außerdem betrifft die Erfindung Verfahren zur Herstellung dieser Verbundelemente, insbesondere von Karosserieteilen von Automobilen, Lastkraftwagen oder Flugzeugen sowie Automobiltüren, Kotflügel, Automobildächer, Motorhauben von Automobilen, Heckklappen von Automobilen, Außenhäute von Flugzeugen, nicht-tragende Verkleidungen im Schiffbau, die die oben genannte erfindungsgemäße Schichtstruktur enthalten.

Im Automobilbau wird Stahl wegen seiner hervorragenden mechanischen Eigenschaften als Material z.B. für die Karosserie eingesetzt. Ein Nachteil von Stahl ist das hohe Gewicht. Als Alternative zum Stahl wird z.B. Aluminium eingesetzt, dass leichter ist, aber schlechtere mechanische Eigenschaften hat und teurer ist.

Neben reinen Metallkonstruktionen sind bereits Verbundelemente im Automobilbau bekannt.

EP-A 500 376 beschreibt die Verwendung eines Metall-Kunststoff-Metall-Verbundes zur Vibrationsdämpfung mit einer Stahldicke von 0,2 bis 2 mm und einer Kunststoffdicke von 0,02 bis 0,15 mm. Der Kunststoff wird auf Basis von Prepolymeren hergestellt.

US 4859523 beschreibt die Verwendung eines Stahl-Kunststoff-Stahl-Verbundes, wobei der Kunststoff ein Polyurethan auf Basis eines Polyesterdiols ist und eine Glasstemperatur zwischen 0 und 70 °C aufweist. In beiden Schriften weist die Kunststoffschicht eine Glastemperatur von kleiner 70°C auf. Diese geringe Glastemperatur, auf deren Bedeutung insbesondere in der US 4859523 hingewiesen wird, führt zu einer geringen Härte und, insbesondere bei hohen Temperaturen, zu Schwierigkeiten bei der Verarbeitung der Verbundelemente. Auch die Bereitstellung der Verbundelemente gemäß EP-A 500 376 und US 4859523 durch Herstellung der Kunststoffschicht in einem Lösungsmittel und anschließender Trocknung auf der Metallschicht ist aufwendig und aufgrund des Einsatzes von Lösungsmitteln problematisch.

Ähnlich aufwendig ist die Herstellung eines Stahl-Kunststoff-Stahl-Verbundes wie er in der WO 02/4394 beschrieben wird. Dort wird jede Schicht des Verbundes unabhängig voneinander hergestellt und erst dann eine erste Metallschicht, eine Kunststoffschicht und eine zweite Metallschicht zu einem Verbund verklebt.

DE-A 101 58 491 offenbart Metall-Polyurethan-Laminate, deren Herstellung z.B. kontinuierlich durch Einfüllen der Ausgangskomponenten zur Herstellung der Polyurethanschicht zwischen die Metalldeckschichten erfolgen kann.

Verbesserungsbedarf bei diesen bekannten Verbundelementen besteht insbesondere in ihrer Herstellung. Da in einigen Aufführungsformen die Ausgangskomponenten zur Herstellung der Polyurethanschicht in flüssiger Form zwischen die Deckschichten eingebracht werden müssen, kann es durch seitliches Wegfließen sowohl zum Verlust an Ausgangsstoffen als auch zu nicht ausgefüllten Fehlstellen zwischen den Deckschichten kommen.

Bei Verfahren, bei denen Klebstoff oder Lösungsmittel verwendet werden, ist ein zusätzlicher Trocknungsschritt erforderlich.

Ziel der vorliegenden Erfindung war es daher, ein neues Verbundmaterial zu entwickeln, das insbesondere über ein sicheres und einfaches Herstellverfahren zugänglich ist.

Diese Aufgabe konnte durch die eingangs dargestellten Verbundelemente gelöst werden.

Die erfindungsgemäßen Verbundelemente zeichnen sich dadurch aus, dass das Polyisocyanat-Polyadditionsprodukt, insbesondere Polyurethan der Schicht (ii) in einem Trägermaterial vorliegt. Unter dem Ausdruck "in einem Trägermaterial vorliegt" ist zu verstehen, dass es sich bei dem Trägermaterial um ein Material handelt, das zumindest partiell, bevorzugt vollständig von dem Polyisocyanat-Polyadditionsprodukt durchzogen, d.h. durchtränkt ist. Das Trägermaterial liegt somit in dem Polyisocyanat-Polyadditionsprodukt und das Polyisocyanat-Polyadditionsprodukt in dem Trägermaterial vor. Der Einsatz des Trägermaterials bietet den wichtigen Vorteil, dass die flüssigen Ausgangskomponenten zur Herstellung der Polyisocyanat-Polyadditionsprodukte in dem Trägermaterial fixiert werden, d.h. ein Herauslaufen oder Heraustropfen kann verhindert werden. Bevorzugt verbinden die Polyisocyanat-Polyadditionsprodukte die Schicht (ii) haftend mit der Schicht (i) und der Schicht (iii).

Die erfindungsgemäßen Verbundelemente sind leichtgewichtig, schallabsorbierend und stabil beim Lackbrennverfahren. Zudem weisen die Verbundelemente auch bei Temperaturen von 200 °C eine hohe Steifigkeit auf. Durch die hervorragende Haftung des Polyurethans zum Metall einerseits und die hervorragende Bruchdehnung des Polyurethans von über 30%, bevorzugt über 50%, besonders bevorzugt über 100 % andererseits, kann der Verbund bevor und nachdem er hohen Temperaturen ausgesetzt war auf den üblichen Maschinen (z.B. Pressen) zur Stahlverarbeitung im z.B. Automobilbau eingesetzt werden, z.B. beim Kaltumformen.

Als Schichten (i) und (iii) können gleiche oder verschiedene, bevorzugt gleiche, allgemein bekannte Metalle eingesetzt werden, z.B. Aluminium, Aluminiumlegierungen, gegebenenfalls Oberflächenmodifiziertes Kupfer, Bronze, Magnesium, Magnesiumlegierungen, Stahl, verzinkter Stahl, rostfreier Stahl, galvanisierter Stahl, verchromte Metalle, z.B. verchromter Stahl, bevorzugt Stahl oder Stahllegierungen, z.B. Chrom/Chromoxid-beschichteter Stahl oder Zinn-freier Stahl, besonders bevorzugt Stahl. Die beiden Metallschichten (i) und (iii) auf jeder Seite des Kunststoffs können entweder aus dem gleichen Material sein oder aus verschiedenen und sie können entweder die gleiche Dicke haben oder unterschiedliche.

Bei dem Trägermaterial handelt es sich bevorzugt um faserige und/oder poröse Materialien. Dies bietet den Vorteil, das die flüssigen Ausgangskomponenten zur Herstellung des Polyurethans gut von dem Trägermaterial aufgesogen und festgehalten werden. Ein Herausfließen oder Heraustropfen aus dem Trägermaterial kann dadurch verhindert werden. Besonders bevorzugt handelt es sich bei dem Trägermaterial um pflanzliche Fasern, Kunststofffasern und/oder Glasfasern. Als pflanzliche Fasern kommen z.B. Callulose, Hanffasern, Sisal, Kokosfasern, Flachs, Baumwollfasern in Frage. Als Kunststofffasern oder Glasfasern können allgemein bekannte Fasern eingesetzt werden. Die Trägermaterialien können bevorzugt als flächige Gebilde, z.B. als Papier oder Pappe, oder auch als Gewebe oder Gewirke vorliegen. Die Fasern können gepresst, gewirkt, gewebt oder verfilzt vorliegen. Bevorzugt sind Trägermaterialien, die mindestens 25% des Eigengewichts an flüssigen Ausgangskomponenten zur Herstellung der Polyisocyanat-Polyadditionsprodukte aufnehmen können. Es können in einem Verbundelement auch mehrere oder verschiedene Trägermaterialien eingesetzt werden, z.B. Mischgewebe oder mehrlagige Materialien, oder eine Kombination von Fasern und Matten, wobei die Fasern bevorzugt kontinuierlich eingefahren werden, so wie bei dem Pultusions Prozessverfahren. Besonders bevorzugt als Trägermaterialien sind hoch poröse Materialien, die relativ viel PU Gemisch aufnehmen können.

Die Schicht (ii) weist bevorzugt eine Dichte von 800 kg/m³ bis 1600 kg/m³, besonders bevorzugt 800 kg/m³ bis 1200 kg/m³, insbesondere 900 kg/m³ bis 1100 kg/m³ auf.

Der Speichermodul (Torsionspendel-Verfahren) der Schicht (ii) beträgt bevorzugt zwischen 60 und 350 MPa bei Temperaturen zwischen -20 und +80°C (nach DIN EN ISO 6721) und/oder mindestens 1,7 MPa bei Temperaturen zwischen +160 und +220°C (nach DIN EN ISO 6721). Die Bruchdehnung nach DIN EN ISO 527 der Schicht (ii) ist bevorzugt größer als 30 %, besonders bevorzugt größer als 50 %, insbesondere größer als 100 %. Im T-Peel-Test weist die Schicht (ii) bevorzugt eine Haftung an die Schicht (i) und/oder (iii) von mindestens 30 N/cm, besonders bevorzugt mindestens 50 N/cm auf. Die Glastemperatur der Schicht (ii) ist bevorzugt größer als 75°C, besonders bevorzugt 80°C bis 220°C, insbesondere 80°C bis 150°C. Die Messung der Glastemperatur ist dem Fachmann allgemein bekannt und vielfältig beschrieben. In dieser Schrift bedeutet die Glastemperatur das bei höheren Temperaturen liegende Maximum der tan Delta-Kurve, die bei der Torsionsmodulmessung aus den beiden gemessenen Speicher- und Verlustmodulkurven berechnet wird. Diese Mindestanforderungen an das Sandwich und das Elastomer werden bevorzugt auch nach einer Wärmelagerung von 1 h bei 200°C erfüllt.

Die Erfindung betrifft des weiteren Verfahren zur Herstellung von Verbundelementen, die die folgende Schichtstruktur aufweisen:
(i) 0,05 mm bis 2 mm Metall,
(ii) 0,1 mm bis 2 mm Trägermaterial enthaltend Polyisocyanat-Polyadditionsprodukte,
(iii) 0,05 mm bis 2 mm Metall,
wobei man die flüssigen Ausgangskomponenten zur Herstellung der Polyisocyanat-Polyadditionsprodukte auf das Trägermaterial aufträgt, bevorzugt das Trägermaterial mit den flüssigen Ausgangskomponenten durchtränkt, anschließend das Trägermaterial zwischen den Schichten (i) und (iii) platziert, bevorzugt mit Kontakt zu den Schichten (i) und (iii), und die Ausgangskomponenten zur Herstellung der Polyisocyanat-Polyadditionsprodukte aushärtet.

Bevorzugt wird man in einem kontinuierlichen Prozess das Trägermaterial enthaltend die Ausgangskomponenten zur Herstellung der Polyisocyanat-Polyadditionsprodukte und die Schichten (i) und (iii) bevorzugt in eine Bandanlage einführen und in dieser Bandanlage die flüssigen Ausgangskomponenten zur Herstellung der Polyisocyanat-Polyadditionsprodukte zwischen (i) und (iii) umsetzen und anschließend das Verbundelement gegebenenfalls zuschneiden und gegebenenfalls in einer Presse formen.

Dabei kann das Trägermaterial vor dem Auftragen der Ausgangskomponenten zur Herstellung der Polyisocyanat-Polyadditionsprodukte bevorzugt eine Dicke aufweisen, die größer ist als die Dicke der Schicht (ii). D.h., dass man das Trägermaterial enthaltend die Ausgangskomponenten zur Herstellung der Polyisocyanat-Polyadditionsprodukte vor und/oder während der Umsetzung der Ausgangskomponenten zur Herstellung der Polyisocyanat-Polyadditionsprodukte zwischen den Schichten (i) und (iii) bevorzugt auf die Dicke der Schicht (ii) presst. Durch die ursprünglich größere dicke des Trägermaterials und das anschließende Pressen auf die gewünschte Dicke der Schicht (ii) können die flüssigen Auskomponenten zur Herstellung des Polyurethans in dem Trägermaterial verteilt werden und dadurch das Trägermaterial zumindest partiell, bevorzugt vollständig mit den Ausgangskomponenten durchtränkt werden.

Die Herstellung der Verbundelemente kann somit beispielsweise derart erfolgen, dass das Metall auf einer Doppelbandanlage von Rollen abgerollt und entweder kontinuierlich oder Stücken verarbeitet wird. Bei der Herstellung kann man bevorzugt in einem kontinuierlichen- Prozess das Metall der Schichten (i) und (iii), beispielsweise mit einer Breite von üblicherweise 1 m bis 2 m, bevorzugt 1,4 m bis 1,6 m, beispielsweise durch Abrollen von entsprechenden Rollen bevorzugt parallel bevorzugt horizontal bevorzugt mit gleicher Geschwindigkeit in eine Bandanlage einführen. Die Geschwindigkeit, mit der die Metallschichten (i) und (iii) durch die Bandanlage bewegt werden, beträgt bevorzugt 5 m/min bis 20 m/min.

Der Herstellprozess sollte bevorzugt einen konstanten Abstand der beiden Metallschichten gewährleisten. Zwischen die Metallschichten, die die Schichten (i) und (iii) darstellen, wird bevorzugt das Trägermaterial geführt, auf das die Ausgangskomponenten zur Herstellung der Polyisocyanat-Polyadditionsprodukt, insbesondere das Polyurethan aufgetragen wurden. Das Benetzen oder bevorzugt Durchtränken des Trägermaterials mit den flüssigen Ausgangskomponenten kann mittels üblicher Dosierapparaturen beispielsweise über einen allgemein bekannten Mischkopf erfolgen. Die Austragung der flüssigen Komponenten kann dabei nach beispielweise aus der Herstellung von Sandwichelementen mit Polyurethankern mittels Bandanlagen allgemein bekannten Verfahren und Vorrichtungen erfolgen. Als Dosierapparaturen kommen beispielsweise statisch Mischer, Hoch- und Niederdruckmaschinen, vorzugsweise Hochdruckmaschinen in Betracht. Die Förderleistung kann in Abhängigkeit von der Dicke der Schicht (ii) variiert werden. Um eine vollständige Befüllung des Raumes zwischen (i) und (iii) zu gewährleisten, wird die Förderleistung und Fördereinrichtung bevorzugt auf die Bandgeschwindigkeit abgestimmt. Bevorzugt handelt es sich um Niederdruck- oder besonders bevorzugt Hochdruckmaschinen, bevorzugt mit Kolbendosierung, besonders bevorzugt Axialkolbendosierung, wobei bevorzugt der Vorratsbehälter mit Rührwerk und bevorzugt temperierbar ausgestaltet ist und bevorzugt ein Kreislauf Vorratsbehälter-Mischkopf-Vorratsbehälter vorliegt, wobei bevorzugt die Austragsleistung 1 bis 30 kg/min beträgt. Die Ausgangskomponenten zur Herstellung der Polyisocyanat-Polyadditionsprodukte werden üblicherweise bei einer Temperatur von 0 bis 100°C, vorzugsweise von 20 bis 60°C, gemischt. Die Vermischung kann mechanisch mittels eines Rührers oder einer Rührschnecke, bevorzugt aber durch das bei Hochdruckmaschinen übliche Gegenstromprinzip erfolgen, bei dem A- und B-Komponenten-Strahl sich im Mischkopf unter jeweils hohem Druck treffen und vermischen, wobei der Strahl einer jeden Komponente auch geteilt sein kann. Die Reaktionstemperatur, d.h. die Temperatur, bei die Umsetzung erfolgt, beträgt in Abhängigkeit von der Materialdicke üblicherweise > 20°C, bevorzugt 50 bis 150°C. Besonders bevorzugt wird das Verbundelement nach dem Zusammenführen der drei Schichten auf mindestens 100°C, insbesondere zwischen 100 und 150°C beheizt. Dies kann durch einen Ofen oder andere Wärmestrahlung erfolgen. Alternativ kann auch das oben beschriebene Plattenband beheizbar sein.

Das Auftragen der Ausgangskomponenten auf das Trägermaterial kann somit auf verschiedene Arten erfolgen:
Polyol- und Isocyanatkomponente können mit Hoch- oder Niederdruckmaschine miteinander vermischt und als Flüssigkeit auf das Trägermaterial aufgetragen werden. Das Auftragen der reaktiven Flüssigkeit kann durch Aufgießen, Versprühen oder Bestreichen erfolgen. Der Mischkopf kann beim Auftragen bevorzugt über das Trägermaterial oszillieren. Die Ausgangskomponenten können zusätzlich noch mit einer Gießharke verteilt werden. Eine Gießharke ist aus der Herstellung von Hartschäum-Sandwichelementen wohlbekannt. Bei Bedarf kann außerdem zur Verbesserung der Verteilung der Ausgangskomponenten ein sogenanntes Messer verwendet, das quer zur Laufrichtung des Trägermaterials angeordnet ist und überschüssige Ausgangskomponenten vom Trägermaterial abstreift. Nach dem Auftragen der reaktiven Flüssigkeit kann auf das Trägermaterial wird dieses wie bereits eingangs dargestellt bevorzugt kontinuierlich in einer Doppelbandanlage zwischen die zwei Metallschichten geführt und der noch nicht ausreagierte Verbund mit Pressen bzw. Rollen auf die gewünschte Dicke des Verbundes gebracht. Wenn mehr als ein Walzenpaar verwendet wird, können die Walzen zueinander jeweils den gleichen oder verschiedene Abstände haben, bevorzugt wird der Abstand der Walzen bei jedem nachfolgenden Walzenpaar kleiner. Zur besseren Umsetzung der reaktiven Ausgangskomponenten zur Herstellung der Polyisocyanat-Polyadditionsprodukte kann die Bandanlage, bevorzugt Doppelbandanlage einen temperierten Bereich aufweisen. Das Verbundelement kann anschließend in einer Presse geformt, bevorzugt kalt verformt werden.

Die Oberflächen von (i) und (iii) können beschichtet sein oder vor der Herstellung der Verbundelemente zur Reinigung und Erhöhung der Oberflächenrauhigkeit aufgeraut werden. Die Oberflächen von (i) und (iii), an die (ii) haften soll, sind bevorzugt frei von anorganischen und/oder organischen Stoffen, die eine Haftung vermindern, beispielsweise Staub, Schmutz, Ölen und Fetten oder allgemein als Formtrennmitteln bekannten Stoffen. Zur Verbesserung der Haftung zwischen Polyurethan und Metall, beispielsweise Stahl kann die Stahloberfläche des weiteren z.B. durch Corona, Beflammung und Beschichtung mit einem Haftvermittler vorbehandelt werden.

Geeignete Bandanlagen sind allgemein bekannt, kommerziell erhältlich und beispielsweise zur Herstellung von Polyurethanhartschaumsandwichelementen allgemein bekannt.

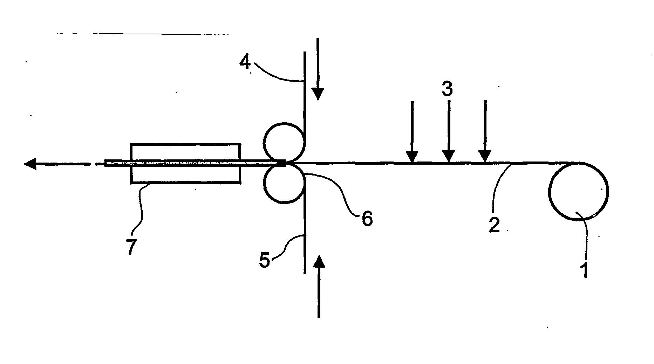

Das erfindungsgemäße Verfahren ist beispielhaft in der Figur 1 dargestellt. In dieser Darstellung haben die Abkürzungen die folgende Bedeutung:
1: aufgewickeltes Trägermaterial
2: Trägermaterial
3: flüssige Ausgangskomponenten zur Herstellung des Polyurethans
4: Stahl (Schicht (i))
5: Stahl (Schicht (iii))
6: Rollen/Pressen
7: Heizung.

Das Verformen des Verbundelementes erfolgt bevorzugt, nachdem entweder die flüssigen Ausgangskomponenten zum (ii) Polyisocyanat-Polyadditionsprodukt ausreagiert haben oder der Klebevorgang zur Erzeugung der haftenden Verbindung zwischen den Schichten (i) und (ii) bzw. (ii) und (iii) abgeschlossen ist. Das Formen oder Verformen des Verbundelementes kann mittels üblicher Pressen bei Temperaturen von 5°C bis 50°C, bevorzugt 10°C bis 35°C erfolgen. Eine Verformung des Verbundelementes bei diesen Temperaturen wird üblicherweise auch "Kaltverformung" genannt. Aufgrund des elastischen Material als Schicht (ii) sowie der guten Haftung von (ii) an (i) und (iii) kommt es bei dieser Formung üblicherweise nicht zu einer Ablösung der Schicht (ii) von (i) oder (iii).

Die erfindungsgemäße hergestellten Verbundelemente werden bevorzugt auf ihrer im Einsatz sichtbaren Oberfläche-nach-üblichen Verfahren mit allgemein bekannten Lacken lackiert, wobei ein üblicher Lackaufbau mit Grundierung usw. gewählt werden kann. Bevorzugt kann man den Lack bei einer Temperatur von mindestens 200°C trocknen. Gerade bei dieser weiteren Verarbeitung der erfindungsgemäßen Karosserieteile nach der Formung in der Presse zeigt sich der Vorteil des erfindungsgemäßen Systems, da es auch bei hohen Temperaturen stabil ist und eine Verformung des Verbundelementes bei Temperaturen von 200°C vermieden wird.

Bevorzugt enthält die Flüssigkeit zur Herstellung der Polyisocyanat-Polyadditionsprodukte (a) Isocyanate und (b) gegenüber Isocyanaten reaktive Verbindungen. In dieser Schrift sind unter den Ausdrücken "Ausgangsstoffe" oder "Ausgangskomponenten" insbesondere (a) Isocyanate und (b) gegenüber Isocyanaten reaktive Verbindungen zu verstehen, aber gegebenenfalls, soweit sie zum Einsatz kommen, auch (c) Gase, (d) Katalysatoren, (e) Hilfsmittel und/oder (f) Treibmittel.

Die Herstellung der erfindungsgemäßen Polyisocyanat-Polyadditionsprodukte (ii), üblicherweise Polyurethane, die gegebenenfalls Harnstoff- und/oder Isocyanuratstrukturen aufweisen können, kann durch allgemein bekannte Umsetzung von (a) Isocyanaten mit (b) gegenüber Isocyanaten reaktiven Verbindungen gegebenenfalls in Gegenwart von Treibmitteln (f), gegebenenfalls 1 bis 50 Volumen-%, bezogen auf das Volumen der Polyisocyanat-Polyadditionsprodukte, mindestens eines Gases (c), (d) Katalysatoren und/oder (e) Hilfsmittel erfolgen. Bevorzugt werden (f) Treibmittel anstelle von (c) Gasen verwendet.

Bevorzugt erfolgt die Herstellung der Polyisocyanat-Polyadditionsprodukte (ii) durch Umsetzung von (a) Isocyanaten mit (b) gegenüber Isocyanaten reaktive Verbindungen gegebenenfalls in Gegenwart von Katalysatoren (d), (e) Hilfsmitteln und/oder (f) Treibmitteln sowie in Abwesenheit von Lösungsmitteln. Unter dem Ausdruck "Lösungsmittel" sind insbesondere allgemein bekannte organische Verbindungen zu verstehen, insbesondere solche, die gegenüber (a) und (b) inert sind und nach Umsetzung von (a) mit (b) aus dem Reaktionsprodukt entfernt werden, z.B. organische Verbindungen mit einem Siedepunkt bei einem Druck von 1 bar von 50°C bis 170°C.

Die Ausgangsstoffe (a), (b), (c), (d), (e) und (f) in dem erfindungsgemäßen Verfahren werden im Folgenden beispielhaft beschrieben:

Als Isocyanate (a) kommen die an sich bekannten aliphatischen, cycloaliphatischen, araliphatischen und/oder aromatischen Isocyanate, bevorzugt Diisocyanate in Frage, die gegebenenfalls nach allgemein bekannten Verfahren biuretisiert und/oder isocyanuratisiert worden sein können. Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3- und/oder 1,4-diisocyanat, 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, 1-Isocyanato-3,3,5-trimethyl-5-isocyanatomethylcyclohexan (IPDI), 2,4- und/oder 2,6-Toluylendiisocyanat (TDI), 4,4'-, 2,4'- und/oder 2,2'-Diphenylmethandiisocyanat (MDI), Polyphenylpolymethylen-polyisocyanate und/oder Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden. Bevorzugt werden 2,4'-, 2,2'- und/oder 4,4'-MDI und/oder Polyphenylpolymethylen-polyisocyanate eingesetzt, besonders bevorzugt Mischungen enthaltend Polyphenylpolymethylen-polyisocyanate und mindestens eines der MDI-Isomere.

Als (b) gegenüber Isocyanaten reaktive Verbindungen können beispielsweise Verbindungen eingesetzt werden, die als gegenüber Isocyanaten reaktive Gruppen Hydroxyl-, Thiol- und/oder primäre und/oder sekundäre Aminogruppen aufweisen und üblicherweise ein Molekulargewicht von 60 bis 10000 g/mol aufweisen, z.B. Polyole ausgewählt aus der Gruppe der Polymerpolyole, Polyetherpolyalkohole, Polyesterpolyalkohole, Polythioether-polyole, hydroxylgruppenhaltigen Polyacetale und hydroxylgruppenhaltigen aliphatischen Polycarbonate oder Mischungen aus mindestens zwei der genannten Polyole. Diese Verbindungen weisen üblicherweise eine Funktionalität gegenüber Isocyanaten von 2 bis 6 und ein Molekulargewicht von 400 bis 8000 auf und sind dem Fachmann allgemein bekannt.

Beispielsweise kommen als Polyetherpolyalkohole, die nach bekannter Technologie durch Anlagerung von Alkylenoxiden, beispielsweise Tetrahydrofuran, 1,3-Propylenoxid, 1,2- bzw. 2,3-Butylenoxid, Styroloxid und vorzugsweise Ethylenoxid und/oder 1,2-Propylenoxid an übliche Startersubstanzen erhältlich sind. Als Startersubstanzen können beispielsweise bekannte aliphatische, araliphatische, cycloaliphatische und/oder aromatische Verbindungen eingesetzt werden, die mindestens eine, bevorzugt 2 bis 4 Hydroxylgruppen und/oder mindestens eine, bevorzugt 2 bis 4 Aminogruppen enthalten. Beispielsweise können als Startersubstanzen Ethandiol, Diethylenglykol, 1,2- bzw. 1,3-Propandiol, 1,4-Butandiol, 1,5-Pentandiol, 1,6-Hexandiol, 1,7-Heptandiol, Glycerin, Trimethylolpropan, Neopentylglykolykol, Zucker,beispielswesie Saccharose, Pentaerythrit, Sorbitol, Ethylendiamin, Propandiamin, Neopentandiamin, Hexamethylendiamin, Isophorondiamin, 4,4'-Diaminodicyclohexylmethan, 2-(Ethylamino)ethylamin, 3-(Methylamino)propylamin, Diethylentrimamin, Dipropylentriamin und/oder N,N'-Bis-(3-aminopropyl)-ethylendiamin eingesetzt werden.

Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen.

Als Polymerpolyole, einer speziellen Klasse der Polyetherpolyole, können allgemein aus der Polyurethanchemie bekannte Verbindungen eingesetzt werden, bevorzugt Styrol-Acrylnitril-Pfropfpolyole. Gerade der Einsatz von Polymerpolyolen kann den Schrumpf des Polyisocyanat-Polyadditionsproduktes, beispielsweise des Polyurethans deutlich vermindern und somit zu einer verbesserten Haftung von (ii) an (i) und (iii) führen. Gegebenenfalls können als weiteren Maßnahmen, den Schrumpf zu verringern, bevorzugt Treibmittel (f) und/oder Gase (c) eingesetzt werden.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Die Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.

Die erfindungsgemäßen Verbundelemente werden bevorzugt unter Verwendung von Polyetherpolyalkoholen als Komponente (b) zur Umsetzung mit den Isocyanaten hergestellt, zweckmäßigerweise solche mit einer mittleren Funktionalität gegenüber Isocyanaten von 1,5 bis 8, bevorzugt 2 bis 6, besonders bevorzugt 2,5 bis 4 und einem Molekulargewicht von 400 bis 8000.

Die Verwendung von Polyetherpolyalkoholen bietet erhebliche Vorteile durch eine verbesserte Stabilität der Polyisocyanat-Polyadditionsprodukte gegen eine hydrolytische Spaltung und aufgrund der geringeren Viskosität, jeweils im Vergleich mit Polyesterpolyalkoholen. Die verbesserte Stabilität gegen Hydrolyse ist insbesondere bei einem Einsatz im Automobilaußenbereich vorteilhaft. Die geringere Viskosität der Polyetherpolyalkohole und der Reaktionsmischung zur Herstellung von (ii) enthaltend die Polyetherpolyalkohle ermöglicht eine einfachere Befüllung des Raumes zwischen (i) und (iii) mit der Reaktionsmischung zur Herstellung der Verbundelemente.

Als gegenüber Isocyanaten reaktive Verbindungen können des weiteren zusätzlich zu den genannten Verbindungen mit einem üblichen Molekulargewicht von 400 bis 8000 gegebenenfalls Diole und/oder Triole mit Molekulargewichten von 60 bis <400 als Kettenverlängerungs- und/oder Vernetzungsmittel bei dem erfindungsgemäßen Verfahren eingesetzt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 auf. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10,o-,m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan, niedermolekulare hydroxylgruppenhaltige Polyalkylenoxide auf Basis Ethylen- und/oder 1,2-Propylenoxid und den vorgenannten Diolen und/oder Triolen als Startermoleküle und/oder Diamine wie z.B. Diethyltoluendiamin und/oder 3,5-Dimethylthio-2,4-toluenediamin.

Sofern zur Herstellung der Polyisocyaynat-Polyadditionsprodukten Kettenverlängerungsmittel, Vernetzungsmittel oder Mischungen davon Anwendung finden, kommen diese zweckmäßigerweise in einer Menge von 0 bis 30 Gew.-%, vorzugsweise von 1 bis 30 Gew.%, bezogen auf das Gewicht der insgesamt eingesetzten gegenüber Isocyanaten reaktiven Verbindungen (b), zum Einsatz.

Mit dem Einsatz von Amin-gestarteten Polyetherpolyalkoholen kann zudem das Durchhärteverhalten von der Reaktionsmischung zur Herstellung von (ii) verbessert werden. Bevorzugt werden die Verbindungen (b), wie auch die anderen Komponenten zur Herstellung von (ii), mit einem möglichst geringen Gehalt an Wasser eingesetzt, um die Bildung von Kohlendioxid durch Reaktion des Wassers mit Isocyanatgruppen zu vermeiden.

Die in den Isocyanat- und Polyolkomponenten verwendeten Substanzen haben üblicherweise unterschiedliche Funktionalitäten. Alle Substanzen mit einer Funktionalität von größer als zwei bewirken eine chemische Vernetzung des Polyisocyanat-Polyadditionsproduktes (ii). Die mittlere Molmasse zwischen zwei chemischen Vernetzungsstelle einer Polymerkette (Mc-Wert) kann z.B. nach PJ Flory, Polym. J. 17, 1 (1985) aus den Funktionalitäten und Massenanteilen der Einsatzstoffe berechnet werden. Zur Erfüllung der beschriebenen mechanischen Eigenschaften des Polyisocyanat-Polyadditionsproduktes (ii) wird die chemische Gesamtvernetzung, bevorzugt von der (a) Isocyanat- und (b) Polyolkomponente bevorzugt so eingestellt werden, dass sich ein Mc-Wert zwischen 900 und 2000 g/mol ergibt. Bevorzugt sind somit Polyisocyanat-Polyadditionsprodukte, bei den der Mc-Wert, bevorzugt berechnet nach PJ Flory, Polym. J. 17, 1 (1985), zwischen 900 g/mol und 2000 g/mol beträgt.

Als Komponente (c) zur Herstellung von (ii) können allgemein bekannte Verbindungen eingesetzt werden, die einen Siedepunkt bei einem Druck von 1 bar von kleiner (d.h. bei niedrigeren Temperaturen als) -50°C aufweisen, beispielsweise Luft, Kohlendioxid, Stickstoff, Helium und/oder Neon. Bevorzugt wird Luft eingesetzt. Die Komponente (c) ist bevorzugt gegenüber der Komponente (a), besonders bevorzugt gegenüber den Komponenten (a) und (b) inert, d.h. eine Reaktivität des Gases gegenüber (a) und (b) ist kaum, bevorzugt nicht nachzuweisen. Der Einsatz des Gases (c) unterscheidet sich grundiegend von dem Einsatz üblicher Treibmittel zur Herstellung von geschäumten Polyurethanen. Während übliche Treibmittel (f) flüssig eingesetzt werden oder im Falle der gasförmigen physikalischen Treibmittel in der Polyol-Komponente bis zu einem geringen Prozentsatz löslich sind) und während der Umsetzung entweder aufgrund der Wärmeentwicklung verdampfen oder aber im Falle des Wassers aufgrund der Reaktion mit den Isocyanatgruppen gasförmiges Kohlendioxid entwickeln, wird in der vorliegenden Erfindung die Komponente (c) bevorzugt bereits gasförmig als Aerosol beispielsweise in der Polyolkomponente eingesetzt.

Als Katalysatoren (d) können allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.%, bezogen auf das Gewicht der insgesamt eingesetzten gegenüber Isocyanaten reaktiven Verbindungen, verwendet wird. Beispielsweise können folgende Verbindungen verwendet werden: Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-hamstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin-, Eisen(II)-chlorid, Zinkchlorid, Bleioctoat und vorzugsweise Zinnsalze, wie Zinndioctoat, Zinndiethylhexoat, Dibutylzinndilaurat und/oder Dibutyldilaurylzinnmercaptid, 2,3-Dimethyl-3,4,5,6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat, und/oder Alkalisalze von langkettigen Fettsäuren mit 10 bis 20 C-Atomen und gegebenenfalls seitenständigen OH-Gruppen.

Es hat sich als sehr vorteilhaft erwiesen, die Herstellung von (ii) in Gegenwart von (d) durchzuführen, um die Reaktion zu beschleunigen.

Der Reaktionsmischung zur Herstellung der Polyisocyanat-Polyadidtionsprodukte (ii) können gegebenenfalls (e) Hilfsmittel einverleibt werden. Genannt seien beispielsweise Füllstoffe, oberflächenaktive Substanzen, Farbstoffe, Pigmente, Flammschutzmittel, Hydrolyseschutzmittel, fungistatische, bakteriostatisch wirkende Substanzen und Schaumstabilisatoren.

Als oberflächenaktive Substanzen kommen z.B. Verbindungen in Betracht, welche zur Unterstützung der Homogenisierung der Ausgangsstoffe dienen und gegebenenfalls auch geeignet sind, die Struktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure. Die oberflächenaktiven Substanzen werden üblicherweise in Mengen von 0,01 bis 5 Gew.-%, bezogen auf 100 Gew.-% der insgesamt eingesetzten gegenüber Isocyanaten reaktiven Verbindungen (b), angewandt.

Geeignete Flammschutzmittel sind beispielsweise Trikresylphosphat,Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der insgesamt eingesetzten gegenüber Isocyanaten reaktiven Verbindungen, zu verwenden.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und Glasfasern geringer Länge. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern. Die anorganischen und organischen Füllstoffe können einzeln oder als Gemische verwendet werden.

Bevorzugt setzt man bei der Herstellung von (ii) 10 bis 70 Gew.-% Füllstoffe, bezogen auf das Gewicht von (ii), als (e) Hilfsmittel ein. Als Füllstoffe verwendet man bevorzugt Talkum, Kaolin, Calziumcarbonat, Schwerspat, Glasfasern und/oder Mikroglaskugeln. Die Größe der Partikel der Füllstoffe ist bevorzugt so zu wählen, daß das Eintragen der Komponenten zur Herstellung von (ii) in den Raum zwischen (i) und (iii) nicht behindert wird. Besonders bevorzugt weisen die Füllstoffe Partikelgrößen von < 0,5 mm auf. Die Füllstoffe können aber auch als interne Abstandhalter eingesetzt werden. In diesem Fall haben die Füllstoffe einen Durchmesser, der der Dicke der Schicht (ii) entspricht.

In diesem Fall werden bevorzugt nur kleinere Mengen an Füllstoff von 1 bis 25 Gew.-%, bezogen auf das Gewicht von (ii), eingesetzt, um ein Verkleben, Verklumpen oder eine Agglomeration von mehreren Füllstoffpartikeln zu vermeiden.

Die Füllstoffe werden bevorzugt in Mischung mit der Polyolkomponente bei der Umsetzung zur Herstellung der Polyisocyanat-Polyadditionsprodukte eingesetzt.

Die Füllstoffe können dazu dienen, den im Vergleich beispielsweise zum Stahl größeren thermischen Ausdehnungskoeffizient der Polyisocyanat-Polyadditionsprodukte zu verringern und damit dem des Stahls anzupassen. Dies für einen nachhaltig festen Verbund zwischen den Schichten (i), (ii) und (iii) besonders vorteilhaft, da damit geringere Spannungen zwischen den Schichten bei thermischer Belastung auftreten.

Bevorzugt werden zur Herstellung von (ii) als (e) übliche Schaumstabilisatoren eingesetzt, die kommerziell erhältlich und dem Fachmann allgemein bekannt sind, beispielsweise allgemein bekannte Polysiloxan-Polyoxyalkylen-Blockcopolymere, z.B. Tegostab 2219 der Firma Goldschmidt. Der Anteil an diesen Schaumstabilisatoren bei der Herstellung von (ii) beträgt bevorzugt 0,001 bis 10 Gew.-%, besonders bevorzugt 0,01 bis 10 Gew.-%, insbesondere 0,01 bis 2 Gew.-%, bezogen auf das Gewicht der zur Herstellung von (ii) eingesetzten Komponenten (b), (e) und gegebenenfalls (d). Der Einsatz dieser Schaumstabilisatoren bewirkt, das die Komponente (c) in der Reaktionmischung zur Herstellung von (ii) stabilisiert wird.

Als Treibmittel (f) können aus der Polyurethanchemie allgemein bekannte Treibmittel eingesetzt werden, beispielsweise physikalische und/oder chemische Treibmittel. Derartige physikalische Treibmittel weisen im allgemeinen einen Siedepunkt bei einem Druck von 1 bar von größer (d.h. bei höheren Temperaturen als) -50°C, bevorzugt - 50°C bis 49°C auf. Beispiele für physikalische Treibmittel sind z.B. FCKW, HFCKW, HFKW, aliphatische Kohlenwasserstoffe, cycloaliphatische Kohlenwasserstoffe, jeweils beispielsweise mit 4 bis 6 Kohlenstoffatomen oder Gemische dieser Stoffe, beispielsweise Trichlorfluormethan (Siedepunkt 24°C), Chlordifluormethan (Siedepunkt - 40.8°C), Dichlorfluorethan (Siedepunkt 32°C), Chlordifluorethan (Siedepunkt -9.2°C), Dichlortrifluorethan (Siedepunkt 27.1°C), Terafluorethan (Siedepunkt -26.5°C), Hexafluorbutan (Siedepunkt 24.6°C), iso-Pentan (Siedepunkt 28°C), n-Pentan (Siedepunkt 36°C), Cyclopentan (Siedepunkt 49°C).

Als chemische Treibmittel, d.h. Treibmittel die aufgrund einer Reaktion, beispielsweise mit Isocyanatgruppen, gasförmige Produkte bilden, kommen beispielsweise Wasser, Hydratwasser haltige Verbindungen, Carbonsäuren, tert.-Alkohole, z.B. t-Butanol, Carbamate, beispielsweise die in der Schrift EP-A 1000955, insbesondere auf den Seiten 2, Zeilen 5 bis 31 sowie Seite 3, Zeilen 21 bis 42 beschrieben Carbamate, Carbonate, z.B. Ammoniumcarbonat und/oder Ammoniumhydrogencarbonat und/oder Guanidincarbamat in Betracht. Bevorzugt werden als Treibmittel (f) Wasser und/oder Carbamate eingesetzt. Bevorzugt werden die Treibmittel (f) in einer Menge eingesetzt, die ausreicht, um die bevorzugte Dichte von (ii) von 800 bis 1200 kg/m³ zu erhalten. Dies kann mit einfachen Routineexperimenten, die dem Fachmann allgemein geläufig sind, ermittelt werden. Besonders bevorzugt werden die Treibmittel (f) in einer Menge von 0,05 bis 10 Gew.-%, insbesondere von 0,1 bis 5 Gew.%, jeweils bezogen auf das Gesamtgewicht der Polyisocyanat-Polyadditionsprodukte, eingesetzt. Geringe Mengen an Treibmittel werden bevorzugt dann verwendet, wenn bei dem erfindungsgemäßen Herstellungsprozess ein Innendruck gegen die Pressen bzw. Rollen der Bandanlage aufgebaut werden soll.

Das Gewicht von (ii) entspricht per Definition dem Gewicht der zur Herstellung von (ii) eingesetzten Komponenten (a), (b) und gegebenenfalls (c), (d), (e) und/oder (f).

Zur Herstellung der erfindungsgemäßen Polyisocyanat-Polyadditionsprodukte werden die Isocyanate und die gegenüber Isocyanaten reaktiven Verbindungen in solchen Mengen zur Umsetzung gebracht, daß das Äquivalenzverhältnis von NCO-Gruppen der Isocyanate (a) zur Summe der reaktiven Wasserstoffatome der gegenüber Isocyanaten reaktiven Verbindungen (b) undgegebenenfalls (f) 0,85 bis 1,25 : 1, vorzugsweise 0,95 bis 1,15 : 1 und insbesondere 1 bis 1,05 : 1, beträgt. Falls (ii) zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8:1, angewandt.

Die Polyisocyanat-Polyadditionsprodukte worden üblicherweise nach dem one shot-Verfahren oder nach dem Prepolymerverfahren, beispielsweise mit Hilfe statischer Mischung oder der Hochdruck- oder Niederdruck-Technik hergestellt.

Als besonders vorteilhaft hat es sich erwiesen, nach dem Zweikomponentenverfahren zu arbeiten und die gegenüber Isocyanaten reaktiven Verbindungen (b), gegebenenfalls die Treibmittel (f) und gegebenenfalls die Katalysatoren (d)-und/oder Hilfsmittel (e) in der Komponente (A) (Polyolkomponente) zu vereinigen und bevorzugt innig miteinander zu vermischen und als Komponente (B) die Isocyanate (a) zu verwenden.

Die Komponente (c) kann der Reaktionsmischung enthaltend (a), (b) und gegebenenfalls (f), (d) und/oder (e) zugeführt werden, und/oder den einzelnen, bereits beschriebenen Komponenten (a), (b), (A) und/oder (B). Die Komponente, die mit (c) gemischt wird, liegt üblicherweise flüssig vor. Bevorzugt wird die Komponenten in die Komponente (b) gemischt.

Das Mischen der entsprechenden Komponente mit (c) kann nach allgemein bekannten Verfahren erfolgen. Beispielsweise kann (c) durch allgemein bekannte Beladungseinrichtungen, beispielsweise Luftbeladungseinrichtungen, bevorzugt unter Druck, beispielsweise aus einem Druckbehälter oder durch einen Kompressor komprimiert, z.B. durch eine Düse der entsprechenden Komponente zugeführt werden. Bevorzugt erfolgt eine weitgehende Durchmischung der entsprechende Komponenten mit (c), so dass Gasblasen von (c) in der üblicherweise flüssigen Komponente bevorzugt eine Größe von 0,0001 bis 10, besonders bevorzugt 0,0001 bis 1 mm aufweisen. Der Gehalt an (c) in der Reaktionsmischung zur Herstellung von (ii) kann in der Rücklaufleitung der Hochdruckmaschine mit allgemein bekannten Messgeräten über die Dichte der Reaktionsmischung bestimmt werden. Die Gehalt an (c) in der Reaktionsmischung kann über eine Kontrolleinheit bevorzugt automatisch auf der Grundlage dieser Dichte reguliert werden. Die Komponentendichte kann während der üblichen Zirkulation des Materials in der Maschine auch bei sehr niedriger Zirkulationsgeschwindigkeit online bestimmt und reguliert werden.

Der Verbund ist durch folgende Eigenschaften gekennzeichnet:
Das Verbundelement ist wesentlich leichter als eine Stahlplatte mit vergleichbarer Steifigkeit. Tiefziehen, Verformen, Pressen oder Biegen des Verbundes führt zu keinen Delaminationen oder Knicken auf der Außenseite. Ein Bauteil aus dem Verbundelement bleibt auch nach einer Wärmelagerung von 1 h bei 200 °C dimensionsstabil. Der Verbund führt im Vergleich zu Metall zu einer verbesserten Vibrations- und Geräuschdämmung. Zur verbesserten Geräuschdämmung können auch Füllstoffe wie Ruß, Kalziumcarbonat, Talk oder Mika zu einer oder mehreren Polymerschichten hinzugegeben werden. Der Verbund hat ein verbessertes Energieabsorptionsvermögen bei Zusammenstößen als Metall. Der Verbund hat eine verbesserte Isolationswirkung gegen hohe und tiefe Temperaturen als Metall.

## Patentansprüche

1. Verbundelemente, die die folgende Schichtstruktur aufweisen:
(i) 0,05 mm bis 2 mm Metall,
(ii) 0,1 mm bis 2 mm Polyisocyanat-Polyadditionsprodukte, die in einem Trägermaterial vorliegen und wobei das Trägermaterial als flächiges Gebilde oder als Gewebe oder Gewirke vorliegt,
(iii) 0,05 mm bis 2 mm Metall.

2. Verbundelemente gemäß Anspruch 1, **dadurch gekennzeichnet, dass** die Schicht (ii) eine Dichte von 800 bis 1600 kg/m³ aufweist.

3. Verbundelemente gemäß Anspruch 1, **dadurch gekennzeichnet, dass** die Schicht (ii) eine Bruchdehnung nach DIN EN ISO 527 von größer 30 % aufweist.

4. Verbundelemente gemäß Anspruch 1, **dadurch gekennzeichnet, dass** die Schicht (ii) eine Haftung an die Schicht (i) und/oder (iii) im T-Peel-Test von mindestens 30 N/cm aufweist.

5. Verbundelemente gemäß Anspruch 1, **dadurch gekennzeichnet, dass** die Schicht (ii) eine Glastemperatur von größer 75°C aufweist.

6. Verbundelemente gemäß Anspruch 1, **dadurch gekennzeichnet, dass** es sich bei dem Trägermaterial um faserige und/oder poröse Materialien handelt.

7. Verbundelemente gemäß Anspruch 1, **dadurch gekennzeichnet, dass** es sich bei den Trägermaterialien um pflanzliche Fasern, Kunststofffasern und/oder Glasfasern handelt.

8. Automobiltüren, Kotflügel, Automobildächer, Motorhauben von Automobilen, Heckklappen von Automobilen, Außenhaut von Flugzeugen auf der Basis von Verbundelementen gemäß Anspruch 1.

9. Verfahren zur Herstellung von Verbundelementen, die die folgende Schichtstruktur aufweisen:
(i) 0,05 mm bis 2 mm Metall,
(ii) 0,1 mm bis 2 mm Trägermaterial enthaltend Polyisocyanat-Polyadditionsprodukte und wobei das Trägermaterial als flächiges Gebilde oder als Gewebe oder Gewirke vorliegt,
(iii) 0,05 mm bis 2 mm Metall,
**dadurch gekennzeichnet, dass** man die flüssigen Ausgangskomponenten zur Herstellung der Polyisocyanat-Polyadditionsprodukte auf das Trägermaterial aufträgt, anschließend das Trägermaterial zwischen den Schichten (i) und (iii) platziert und die Ausgangskomponenten zur Herstellung der Polyisocyanat-Polyadditionsprodukte aushärtet.

10. Verfahren gemäß Anspruch 9, **dadurch gekennzeichnet, dass** man in einem kontinuierlichen Prozess das Trägermaterial enthaltend die Ausgangskomponenten zur Herstellung der Polyisocyanat-Polyadditionsprodukte und die Schichten (i) und (iii) in eine Bandanlage einführt und in dieser Bandanlage die flüssigen Ausgangskomponenten zur Herstellung der Polyisocyanat-Polyadditionsprodukte zwischen (i) und (iii) umsetzt und anschließend das Verbundelement gegebenenfalls zuschneidet und gegebenenfalls in einer Presse formt.

11. Verfahren gemäß Anspruch 9 oder 10, **dadurch gekennzeichnet, dass** das Trägermaterial vor dem Auftragen der Ausgangskomponenten zur Herstellung der Polyisocyanat-Polyadditionsprodukte eine Dicke aufweist, die größer ist als die Dicke der Schicht (ii).

12. Verfahren gemäß Anspruch 11, **dadurch gekennzeichnet, dass** man das Trägermaterial enthaltend die Ausgangskomponenten zur Herstellung der Polyisocyanat-Polyadditionsprodukte vor und/oder während der Umsetzung der Ausgangskomponenten zur Herstellung der Polyisocyanat-Polyadditionsprodukte zwischen den Schichten (i) und (iii) auf die Dicke der Schicht (ii) presst.

## Claims

1. A composite element which has the following layer structure:
(i) from 0.05 to 2 mm of metal,
(ii) from 0.1 to 2 mm of polyisocyanate polyaddition products which are present in a carrier material, the carrier material being a sheet-like structure or a woven or knitted fabric,
(iii) from 0.05 to 2 mm of metal.

2. The composite element according to claim 1, wherein the density of the layer (ii) is from 800 to 1600 kg/m³.

3. The composite element according to claim 1, wherein the tensile strain at break of the layer (ii) to DIN EN ISO 527 is greater than 30%.

4. The composite element according to claim 1, wherein the adhesion of the layer (ii) to the layer (i) and/or (iii) in the T-peel test is at least 30 N/cm.

5. The composite element according to claim 1, wherein the glass transition temperature of the layer (ii) is greater than 75°C.

6. The composite element according to claim 1, wherein the carrier material comprises fibrous and/or porous materials.

7. The composite element according to claim 1, wherein the carrier materials comprise vegetable fibers, synthetic fibers, and/or glass fibers.

8. Doors for automobiles, wheel surrounds, roofs for automobiles, engine hoods for automobiles, tailgates for automobiles, or an outer skin for aircraft, based on composite elements according to claim 1.

9. A process for producing composite elements which have the following layer structure:
(i) from 0.05 to 2 mm of metal,
(ii) from 0.1 to 2 mm of carrier material comprising polyisocyanate polyaddition products, the carrier material being a sheet-like structure or a woven or knitted fabric,
(iii) from 0.05 to 2 mm of metal,
which comprises applying, to the carrier material, the liquid starting components for preparing the polyisocyanate polyaddition products, and then placing the carrier material between the layers (i) and (iii), and curing the starting components to prepare the polyisocyanate polyaddition products.

10. The process according to claim 9, wherein, in a continuous process, the carrier material comprising the starting components for preparing the polyisocyanate polyaddition products, and the layers (i) and (iii) are introduced into a belt system, and in this belt system the liquid starting components for preparing the polyisocyanate polyaddition products are reacted between (i) and (iii), and then, if appropriate, the composite element is trimmed to size and, if appropriate, molded in a press.

11. The process according to claim 9 or 10, wherein the thickness of the carrier material prior to the application of the starting components for preparing the polyisocyanate polyaddition products is greater than the thickness of the layer (ii).

12. The process according to claim 11, wherein, prior to and/or during the reaction of the starting components for preparing the polyisocyanate polyaddition products between the layers (i) and (iii), the carrier material comprising the starting components for preparing the polyisocyanate polyaddition products is compressed to the thickness of the layer (ii).

## Revendications

1. Eléments composites, qui présentent la structure en couches suivante :
(i) 0,05 mm à 2 mm de métal,
(ii) 0,1 mm à 2 mm de produits de polyaddition à un polyisocyanate, qui sont présents dans un matériau de support, le matériau de support étant présent en tant que produit plat ou en tant que tissu ou tricot,
(iii) 0,05 mm à 2 mm de métal.

2. Eléments composites selon la revendication 1, **caractérisés en ce que** la couche (ii) présente une masse volumique de 800 à 1600 kg/m³.

3. Eléments composites selon la revendication 1, **caractérisés en ce que** la couche (ii) présente un allongement à la rupture selon la norme DIN EN ISO 527 supérieur à 30 %.

4. Eléments composites selon la revendication 1, **caractérisés en ce que** la couche (ii) présente une adhérence d'au moins 30 N/cm sur la couche (i) et/ou (iii) dans le test de pliage en T.

5. Eléments composites selon la revendication 1, **caractérisés en ce que** la couche (ii) présente une température de transition vitreuse supérieure à 75 °C.

6. Eléments composites selon la revendication 1, **caractérisés en ce qu'**il s'agit, en ce qui concerne le matériau de support, de matériaux fibreux et/ou poreux.

7. Eléments composites selon la revendication 1, **caractérisés en ce qu'**il s'agit, en ce qui concerne les matériaux de support, de fibres végétales, de fibres synthétiques et/ou de fibres de verre.

8. Portes d'automobiles, ailes, toits d'automobiles, capots de moteur d'automobiles, hayons d'automobiles, revêtements extérieurs d'avions à base des éléments composites selon la revendication 1.

9. Procédé de fabrication d'éléments composites, qui présentent la structure en couches suivante :
(i) 0,05 mm à 2 mm de métal,
(ii) 0,1 mm à 2 mm de matériau de support contenant des produits de polyaddition à un polyisocyanate, le matériau de support étant présent en tant que produit plat ou en tant que tissu ou tricot,
(iii) 0,05 mm à 2 mm de métal,
**caractérisé en ce que** les composants liquides initiaux pour la préparation des produits de polyaddition à un polyisocyanate sont appliqués sur le matériau de support, le matériau de support est ensuite placé entre les couches (i) et (iii) et les composants initiaux pour la préparation des produits de polyaddition à un polyisocyanate sont durcis.

10. Procédé selon la revendication 9, **caractérisé en ce que** le matériau de support contenant les composants initiaux pour la préparation de produits de polyaddition à un polyisocyanate et les couches (i) et (iii) sont introduits par un procédé en continu dans l'unité de production sur bande et les composants liquides initiaux sont amenés à réagir dans cette unité de production sur bande pour la préparation des produits de polyaddition à un polyisocyanate entre (i) et (iii), et l'élément composite est ensuite éventuellement découpé et éventuellement formé dans une presse.

11. Procédé selon la revendication 9 ou 10, **caractérisé en ce que**, avant l'application des composants initiaux pour la préparation des produits de polyaddition à un polyisocyanate, le matériau de support présente une masse volumique supérieure à la masse volumique de la couche (ii).

12. Procédé selon la revendication 11, **caractérisé en ce que**, avant et/ou pendant la réaction des composants initiaux pour la préparation des produits de polyaddition à un polyisocyanate, le matériau de support contenant les composants initiaux pour la préparation des produits de polyaddition à un polyisocyanate est pressé entre les couches (i) et (iii) jusqu'à atteindre la masse volumique de la couche (ii).
